# EUROPEAN PATENT APPLICATION

(11) **EP 4 184 951 A1**
(43) Date of publication of application: **24.05.2023**
(21) Application number: 21208734.0
(22) Date of filing: 17.11.2021
(51) Int. Cl.: H04W 4/02, H04W 4/80, H04R 5/033, H04W 4/06

(54) **METHOD AND SYSTEM FOR BLUETOOTH LE AUDIO BROADCASTING**

(71) Applicant: Sonova AG, 8712 Stäfa (CH)
(72) Inventor: Dickmann, Georg, 8123 Ebmatingen (CH); El-Hoiydi, Amre, 2000 Neuchâtel (CH); Gallo, Alessandro, 3280 Murten (CH)
(74) Representative: Schwan Schorer & Partner mbB

(57) **Abstract**

There is provided a method of broadcasting audio data from a broadcast transmitter device (10C) having a Bluetooth Low Energy Audio (BTLEA) wireless interface (16) to a broadcast receiver device (14) a having a BTLEA wireless interface (16), which comprises: establishing spatial proximity with a predetermined maximal distance between the broadcast receiver device and a broadcast designator device (10C, 18); transmitting, as BT advertisements, by the broadcast designator device, broadcast designation information identifying a broadcast of interest (10C, 12C) for the broadcast receiver device; receiving, by the broadcast receiver device, BT advertisements from the broadcast designator device; identifying, by the broadcast receiver device, the broadcast designator device and storing broadcast designation information received from the broadcast designator device on the broadcast receiver device; and scanning for BTLEA broadcasts (12A, 12B, 12C), and judging, based on the stored received broadcast designation information, whether the broadcast of interest is available.

## Description

The invention relates to a method and system for broadcasting audio data from an audio source device to an audio receiver device using Bluetooth Low Energy Audio (BTLEA) protocols.

BTLEA is a new Bluetooth (BT) concept of set of specifications, which allows broadcasting of audio data from an audio source device to a plurality of audio receiver devices. In particular, BTLEA is no longer restricted to point-to-point audio transfer.

Since BTLEA is a standardized technology, there may be many BTLEA broadcast transmitter devices (audio source devices) present, while a listener using a BTLEA broadcast receiver device (audio receiver device) may be interested only in very few of them. In order to identify a broadcast of interest, the BTLEA standards foresee inclusion of metadata into the transmitted data, allowing a receiver to pick up a transmitter of interest. Such selection would typically imply the use of a broadcast assistant, which is some kind of helper device with a rich user interface, which may present a list of available broadcasts, e.g. by human-readable names, for the user to select from. However, there may be cases in which a user does not want to have or does not want to use such helper device, or the broadcast transmitter device of interest may not provide sufficient metadata to distinguish it from other broadcast transmitter devices that are of no interest.

Further, the broadcast audio signal may be encrypted using a so-called broadcast code. The only means foreseen by the BTLEA standard is to distribute the broadcast code through an encrypted unicast connection, which requires a Bluetooth Low Energy (BTLE) pairing between the audio receiver device and the device distributing the broadcast code (which could be the broadcasting transmitter device or some kind of helper device, which is in possession of the broadcast code). However, since establishment of a Bluetooth pairing implies mutual trust, granting privileged access to resources on either one of the paired devices, a broadcast receiver device may not want to grant such access just for the sake of being able to obtain the broadcast code.

WO 2014/094877 A1 relates to a pairing method for establishing a wireless audio network using a proprietary TDMA based protocol, wherein pairing information is transmitted by a first audio device is accepted with a relatively high likelihood only if the two audio devices are in close proximity with each other, for example less than 10 cm.

US 9,066,327 B2 relates to pairing method for BT enabled devices like smartphones and wireless headsets, wherein pairing is initiated when an RSSI of detected advertising packets is found to exceed a certain threshold.

It is an object of the invention to provide for a user-friendly method of broadcasting audio data from an audio source device to an audio receiver device using BTLEA. It is a further object to provide for a corresponding system.

According to the invention, this object is achieved by a method as defined in claim 1 or 11 and a system as defined in one of claims 13 to 15, respectively.

The invention proposes to establish spatial proximity with a predetermined maximal distance between the broadcast receiver device (or a delegate device of the broadcast receiver device) and a broadcast designator device (which may be the audio source device or an auxiliary device separate from the audio source device) and to transmit, as BT advertisements, broadcast designation information identifying a broadcast of interest for the broadcast receiver device from the broadcast designator device to the broadcast receiver device (or its delegate device), with the broadcast receiver device (or its delegate device) storing that broadcast designation information; according to a variant, the delegate device may receive the broadcast designation information via the broadcast receiver device, i.e., the broadcast receiver device may receive the broadcast designation information from the broadcast designator device and then transmit it to the delegate device.

Thereby the broadcast receiver device is enabled to automatically recognize the availability of the broadcast of interest, so that the broadcast of interest may be selected for reception by the broadcast receiver device or the user may be informed about the availability of the broadcast of interest, so that he or she could, for example, manually select the broadcast of interest. For example, for manual selection of a pre-designated transmitter no rich user interface is needed; at the extreme, a simple button press may be sufficient. Thereby, a user-friendly recognition of a broadcast of interest is enabled, without the need for a separate broadcast assistant device and without the need for manual user interaction, and accordingly without the need for a rich user interface, like a display, which would be needed to list all available or known broadcasters.

According to one example, the scanning for BTLEA broadcasts and the judging whether the broadcast of interest is available is done by the broadcast receiver device.

According to an alternative example, the method further comprises associating a delegate device with the broadcast receiver device, transmitting the broadcast designation information from the broadcast receiver device to the delegate device, and storing the broadcast designation information received from the broadcast receiver device on the delegate device, wherein the scanning for BTLEA broadcasts and the judging whether the broadcast of interest is available is done by the delegate device.

According to one example the method further comprises: selecting, when the broadcast receiver device or the delegate device, respectively, judges that the broadcast of interest is available, by the broadcast receiver device, the broadcast of interest for reception by the broadcast receiver device.

According to an alternative example, the method further comprises displaying, when the broadcast receiver device or the delegate device, respectively, judges that the broadcast of interest is available, the availability of the broadcast of interest to a user.

According to one example, the maximal distance is from 5 cm to 50 cm.

According to one example, the broadcast designator device is identified by estimating, by the broadcast receiver device, the distance to the broadcast designator device and judging whether the estimated distance is not more than the predetermined maximal distance; for example, the distance to the broadcast designator device may be estimated by comparing, by the broadcast receiver device, the received signal strength with a nominal transmit power included in the broadcast designation information received from the broadcast designator device.

According to one example, the transmitting of BT advertisements by the broadcast designator device is started by a user action on the broadcast designator device.

According to one example, the broadcast designator device transmits the BT advertisements with a predetermined transmission power selected such that the transmission range of the BT advertisements is kept substantially within said predetermined maximal distance.

According to one example, the broadcast designator device transmits the BT advertisements for a given transmission time period only, which may be, for example, from 10 sec to 180 sec.

According to one example, the BT advertisements transmitted by the broadcast designator device include a BTLEA broadcast code required for decoding the broadcast of interest.

According to one example, the identification of the broadcast of interest designated in the broadcast designation information includes an identification of the broadcast transmitter device as a specific broadcast device of interest; for example, the identification of the specific broadcast transmitter device of interest may include at least one of: the public BT address of the broadcast transmitter device, the BT Identity Resolving Key of the broadcast transmitter device, a private random BT address of the broadcast transmitter device, and a static random BT address of the broadcast transmitter device.

According to one example, the identification of the broadcast of interest in the broadcast designation information includes an identification of a specific broadcast which may be transmitted by any suitable broadcast transmitter device; for example, the identification of the specific broadcast (12C) may include a BT broadcast ID and/or any metadata or combination of different metadata fields transmitted by the broadcast transmitter device and specific to one or multiple of individual streams of a group of broadcasts having the same broadcast ID.

According to one example, the broadcast designation information includes a field that indicates that the BT advertisement contains broadcast designation information.

According to one example, the broadcast designation information includes information on the transmit power at which the BT advertisement is transmitted.

According to one example, the broadcast transmitter device acts as the broadcast designator device; for example, the broadcast transmitter device may transmit the BT advertisements at lower power than the broadcast audio data and/or for a transmission time period which is shorter than the transmission time period for codec and metadata information associated with BTLEA broadcasts of the broadcast transmitter device.

According to one example, the broadcast designator device is an auxiliary device different from the broadcast transmitter device. For example, the broadcast designator device is a smartphone, a remote control or a dedicated device.

According to one example, the broadcast receiver device is a hearing device; for example, the broadcast receiver device may be a hearing aid or a hearing prosthesis.

According to one example, the broadcast transmitter device is a wireless microphone or a public streaming device, such as public TV or a movie sound track streaming device in a cinema.

According to one example, the method of claim 11 further comprises: transmitting, when the delegate device judges that the broadcast of interest is available, a message from the delegate device to the broadcast receiver device indicating that the broadcast of interest is available; for example, the broadcast receiver device may be instructed by the message to listen to the broadcast of interest. The method may further comprise: displaying, when the delegate device judges that the broadcast of interest is available, by the delegate device, a message that the broadcast of interest is available.

According to one example, the broadcast receiver device is one of the two hearing devices of a binaural hearing system and the delegate device may be the other one of the two hearing devices of the binaural hearing system.

According to another example, the delegate device is a smartphone or a remote control.

Further preferred embodiments are defined in the dependent claims.

Hereinafter, examples of the invention may be illustrated by reference to the attached drawings, wherein:
- Figure 1: is a schematic illustration of a first example of an audio data broadcast system;
- Figure 2: shows a second example of an audio data broadcast system;
- Figure 3: shows a third example of an audio data broadcast system;
- Figure 4: shows a fourth example of an audio data broadcast system;
- Figure 5: shows a fifth example of an audio data broadcast system; and
- Figure 6: shows a sixth example of an audio data broadcast system.

As "hearing device" as used hereinafter is any ear level device suitable for reproducing sound by stimulating a user's hearing, such as an electroacoustic hearing aid, a bone conduction hearing aid, am active hearing protection devoice, a hearing prosthesis device such as a cochlear implant, a wireless headset, an earbud, an earplug, an earphone, etc.

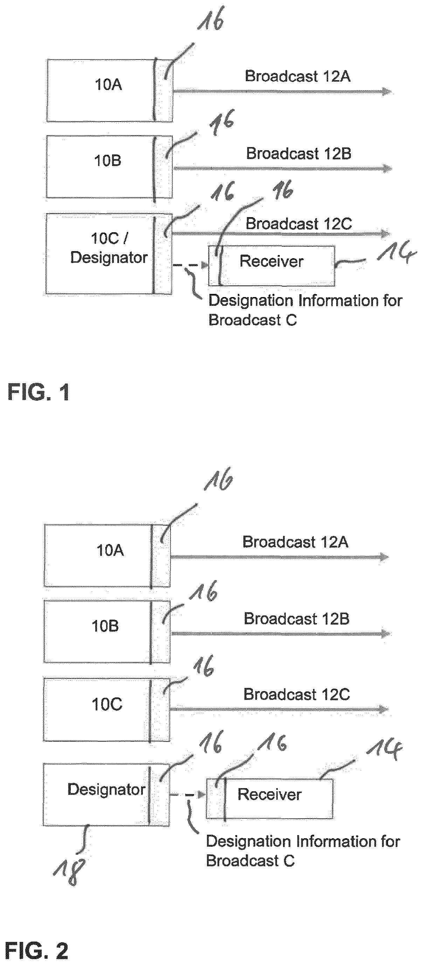

In Figure 1 a first example of an audio data broadcasting system is shown, comprising a plurality of audio data broadcast transmitter devices 10A, 10B and 10C, each of which transmits its own broadcast 12A, 12B and 12C, respectively, thereby acting an audio source device, and an audio data broadcast receiver device 14. Each of the devices is provided with a BTLEA wireless interface 16 for transmitting/receiving audio data by using BTLEA.

In all examples, the receiver device 14 may be a hearing device, in particular an ear-worn hearing device, such as a wireless headset, an earphone, an auditory prosthesis, such as a cochlear implant, or a hearing aid. In particular, the receiver device 14 may be one of the two hearing aids of a binaural hearing aid system.

In all examples, the broadcast transmitter devices (audio source devices) 10A to 10C may be any audio source which may be of interest for the user of the receiver device 14. For example, the broadcast transmitter device may be a wireless assistance microphone, a public TV, a broadcast device providing the soundtrack of a movie in a cinema, etc. It may happen that several broadcast transmitter devices may be within reach of the receiver device 14 (e.g. the broadcast transmitter devices 10A to 10C in Fig. 1), while only certain ones or a single one of them are actually of interest to the user of the receiver device 14. In the example of Fig. 1 this would be the broadcast transmitter device 10C.

For example, there may be a plurality of assistive microphones owned by different persons, while the user of the receiver device 14 would be interested only in receiving an audio signal from his/her own (private) assistive microphone, but would not be interested in audio signals from assistive microphones owned by other persons. Similarly, in case that the assistive microphones are microphones used by teachers in classrooms, the user of the receiver device 14 may be interested only in the audio signal from the microphone used by the teacher in his/her classroom, but not in the audio signals from microphones used in a neighboring classroom. In case that there are several public TVs, for example in a sports bar or a fitness center, the user may be interested only in a specific one of these TV devices. In case of broadcasting of the soundtrack in a cinema, the user of the hearing device 14 may be interested only in the soundtrack of the movie he/she is presently watching, but not in the soundtrack of a movie presented in a neighboring cinema.

On the other hand, it may happen that the user of the receiver device 14 is interested only in a specific broadcast, irrespective by which broadcast transmitter device it is transmitted.

In the example of Fig. 1, the broadcast transmitter device 10C acts as a broadcast designator device, which provides the receiver device 14 with broadcast designation information identifying a broadcast of interest for the receiver device 14. To this end, first spatial proximity with a predetermined maximal distance is established between the receiver device 14 and the broadcast designator device 10C, whereupon the broadcast designator device 10C transmits, as Bluetooth advertisements, such broadcast designation information which is then received by the receiver device 14. The receiver device 14, based on the received broadcast designation information, identifies the broadcast designator device 10C and stores the received broadcast designation information on the receiver device 14. The receiver device 14 then may scan for BTLEA broadcasts and judge, based on the stored broadcast designation information, whether the designated broadcast of interest is presently available. If so, the receiver device 14 then may select the broadcast of interest for reception. Alternatively, the receiver device 14 may display visually or acoustically the availability of the broadcast of interest to the user of the receiver device 14. This allows the user to manually select, if desired, also a broadcast different from the broadcast of interest.

According to one example, the identification of the broadcast of interest designated in the broadcast designation information includes an identification of a specific broadcast transmitter device as a broadcast transmitter device of interest. In this case, the broadcast of interest actually is any audio broadcast transmitted by the uniquely identified broadcast device of interest. In the example of Fig. 1 this would mean that any audio broadcast from the broadcast transmitter device 10C is considered by the receiver device 14 as a broadcast of interest. Such identification may include at least one of: the public BT address of the broadcast transmitter device, the BT identity resolving key (IRK) of the broadcast transmitter device, a private random BT address of the broadcast transmitter device, and a static random BT address of the broadcast transmitter device.

Alternatively, the identification of the broadcast of interest in the broadcast designation information may include an identification of a specific broadcast, which may be transmitted by any suitable broadcast transmitter device. For example, the identification of the specific broadcast may include a BT broadcast ID or any metadata or a combination of different metadata fields that are transmitted by the broadcasting transmitter device and specific to one or multiple of individual streams from within a group of streams having the same broadcast ID (for example, Broadcast ID and metadata are documented in the BAP specification, retrievable from Basic Audio Profile 1.0 - Bluetooth^{®} Technology Website, section 3.7.2.1.1 and section 3.7.2.2). A broadcasting device may transmit multiple streams (e.g. same content in different languages, left/right channels of a stereo signal, or completely unrelated streams). These streams may all be 'bundled' in a common group of broadcasts designated by a single broadcast ID. A designator could then just provide an index pointing to one of these streams or, alternatively, replicate metadata that is specific to one or multiple of the individual streams from within the group of streams having the same broadcast ID.

To ensure privacy and to ensure that broadcast designation information is transferred from the desired broadcast designator device to the desired receiver device such transfer can occur only when the two devices are in close proximity, i.e., within a predetermined maximal distance. According to one example, the maximal distance may be from 5 cm to 50 cm. According to one implementation, the broadcast designator device may be identified by the receiver device by estimating the distance to the broadcast designator device and judging whether the estimated distance is not more than the predetermined maximal distance. For example, the distance to the broadcast designator device may be estimated by comparing the received signal strength with a nominal transmit power included in the broadcast designation information received by the receiver device from the broadcast designator device.

According to one example, the broadcast designation information, in addition to the identification of the specific broadcast device of interest or the specific broadcast of interest, and information on the nominal transmit power at which the BT advertisement with the broadcast designation information is transmitted, may include a field that indicates that the BT advertisement contains broadcast designation information. Further, in case that the broadcast of interest is encrypted, the BT advertisements with the broadcast designation information may include a BTLEA broadcast code required for decoding the encrypted broadcast of interest. This allows the broadcast receiver device to acquire the broadcast code without the need for BT pairing while the risk of accidentally distributing the broadcast code to other broadcast receiver devices is low due to low transmit power and, optionally, a limited time during which the broadcast code is advertised.

In order to preserve privacy and to ensure that the BT advertisements are received by the desired receiver device only, the following features may be implemented. According to one example, the transmitting of BT advertisements by the broadcast designator device is started by a user action on the broadcast designator device. Further, the broadcast designator device may transmit the BT advertisement with a predetermined low transmission power selected such that the transmission range of the BT advertisements is kept substantially within the predetermined maximal distance. Moreover, the broadcast designator device may transmit the BT advertisements for a given transmission time period only which, for example, may be from 10 to 180 sec; alternatively, transmission for an indefinite time may be foreseen.

The relatively low transmission power not only serves to avoid accidental distribution of the information contained in the BT advertisements regarding broadcast designation and/or broadcast code, but also to avoid saturation of the receiver circuitry of the receiving device when being placed in close proximity to the broadcast designator device. Thereby also accidental designation of a broadcast of interest may be avoided.

It is noted that in cases, in which, like in the example of Figure 1, the broadcast designator device also acts as a broadcast transmitter device, the BT advertisements including broadcast designation information and/or broadcast code may be transmitted at significantly lower power than the audio broadcast.

Further, the transmission time period for the BT advertisements with the broadcast designation information may be shorter than the transmission time period for codec and metadata information associated with BTLEA broadcasts of the broadcast designator device which also acts as a broadcast transmitter device. A BTLEA broadcaster typically transmits periodic advertisements that contain information about the codec as well as metadata information, all describing the audio streams that the broadcaster is transmitting (or will be transmitting in the future).

While in the example of Fig. 1 the broadcast designator device also acts as a broadcast transmitter device, the broadcast designator device may be implemented as an auxiliary device separate from the broadcast transmitter devices. Such example is schematically illustrated in Fig. 2 with a separate designator device 18 having a BTLEA interface 16. Such auxiliary device may be, for example, a dedicated device; alternatively, it may be a remote control for the broadcast transmitter devices (such remote control is in possession of specific information relating to the broadcast transmitter device, e.g. the broadcast code, identity information etc., and therefore has a close relationship to the broadcast transmitter device). According to further alternative, it may be a smartphone.

In the examples discussed so far, the receiver device 14 itself receives the broadcast designation information from the broadcast designator device. However, alternatively the receiver device may delegate the detection of the broadcast of interest to a third device, hereinafter labeled "delegate device". To this end, the delegate device has to be associated first with the receiver device 14, so as to enable the delegate device to act as a broadcast assistant device for the receiver device. For example, in a binaural hearing system, one of the two binaural hearing devices may act as the delegate device for the other one of the binaural hearing devices, i.e., one of the hearing devices receives the designation information and instructs the other hearing device to listen to the same broadcast (e.g., by either using the Bluetooth defined Broadcast Assistant functionality or a proprietary equivalent thereof). In another example, a smartphone may act is a delegate device; in this case, the smartphone may receive the designation information and then may act as a broadcast assistant to both hearing devices of the binaural system (according to a variant, the smartphone may act as a broadcast assistant to one of the hearing devices which, in turn, may act as a broadcast assistant to the other hearing device).

In order to detect the broadcast of interest on behalf of the broadcast receiver device, the delegate device needs to know which broadcast is of interest, so that it has to be provided with the broadcast designation information before. According to one example, the delegate device may obtain the broadcast designation information directly from the broadcast designator device after having brought in close proximity to broadcast designator device.

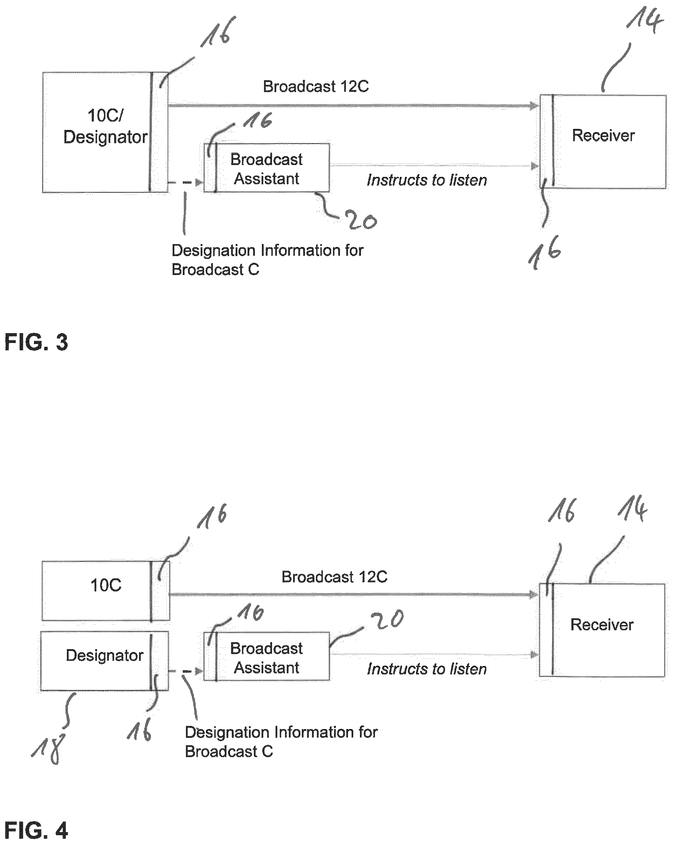

An example of a system using a delegate device 20 with a BTLEA interface 16 which is associated with a broadcast receiver device 14 is illustrated in Fig. 3, in which the delegate device 20 is brought in close proximity to a broadcast transmitter device 10C acting also as the broadcast designator device, so as to receive broadcast designation information via BT advertisements from the broadcast designator device 10C. In this regard, the delegate device 20 acts in the same way as the receiver device 14 in the example of Figs. 1 and 2, i.e., it identifies the broadcast designator device 10C and stores the broadcast designation information received from the broadcast designator device 10C on behalf of the receiver device 14. The delegate device 20 then may scan for BTLEA broadcasts and judge, based on the stored broadcast designation information, whether the BTLEA broadcast of interest is currently available. In case the broadcast of interest is found to be available by the delegate device 20, it may transmit a message to the receiver device 14 indicating that the BTLEA broadcast of interest is available. The receiver device 14 then may decide how to further proceed, for example whether to automatically select the broadcast of interest for reception by the receiver device 14 or to inform the user that the broadcast of interest is available, so that the user can decide. Alternatively, the delegate device 20 may display visually or acoustically a message to the user of the receiver device 14 that the broadcast of interest is available. According to a further alternative, the message transmitted from the delegate device 20 to the receiver device 14 may instruct the receiver device 14 to listen to the broadcast of interest.

The utilization of a delegate device dispenses the receiver device 14 from scanning for the availability of the broadcast of interest, so that energy can be saved by the receiver device 14.

It is also to be noted that the delegate device 20 may act as a delegate device not only for a single receiver device 14, but rather for a plurality of receiver devices.

A modification of the example of Fig. 3 is shown in Fig. 4, wherein the broadcast designator device 18 is separate from any broadcast transmitter devices 10A to 10C, in conformity with the example of Fig. 2.

According to an alternative to the examples of Figs. 3 and 4, the delegate device may obtain the broadcast designation information not directly from the broadcast designator but rather from the associated broadcast receiver device, which has obtained the broadcast designation information before from the broadcast designator.

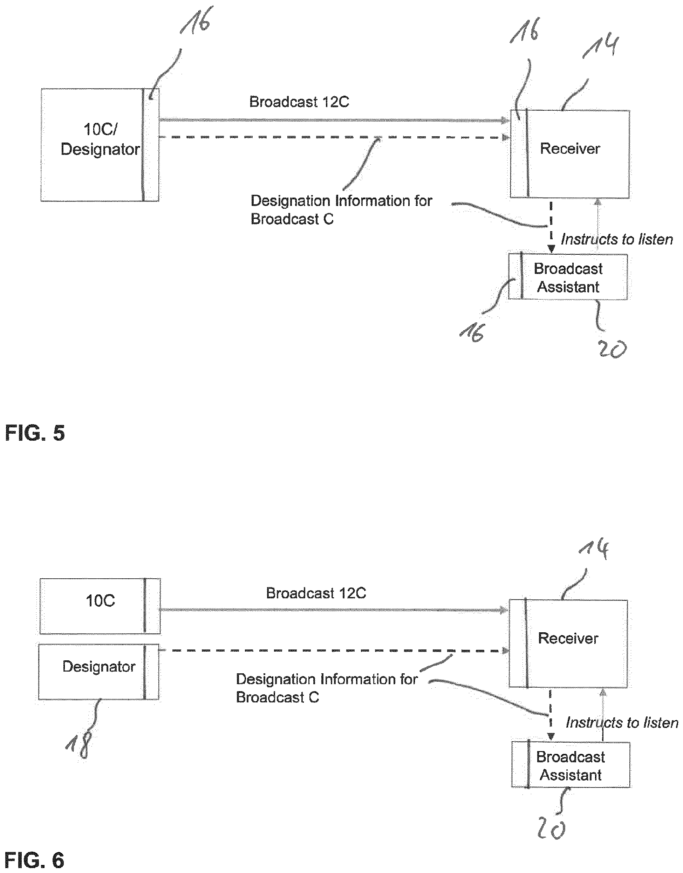

An example of a system using a delegate device 20 with a BTLEA interface 16 only for scanning is illustrated in Fig. 5, in which, in a first step, the broadcast receiver device 14 is brought in close proximity to a broadcast transmitter device 10C acting also as the broadcast designator device, so as to receive broadcast designation information via BT advertisements from the broadcast designator device 10C, and to store the receive broadcast designation information on the broadcast receiver device 14, like in the example of Fig. 1. In a second step, unlike in the example of Fig. 1, the broadcast designation information is transmitted from the broadcast receiver device 14 to a delegate device 20 associated with the broadcast receiver device 14 and is stored on the delegate device 20.

As in the examples of Figs. 3 and 4, the delegate device 20 then may scan for BTLEA broadcasts and judge, based on the stored broadcast designation information, whether the BTLEA broadcast of interest is currently available. Thus, in the example of Fig. 5, the delegate device is used only for the detection of a BTLEA broadcast of interest, while, unlike in the examples of Figs. 3 and 4, the delegate device 20 is not used for obtaining the broadcast designation information.

A modification of the example of Fig. 5 is shown in Fig. 6, wherein the broadcast designator device 18 is separate from any broadcast transmitter devices 10A to 10C, in conformity with the examples of Figs. 2 and 4.

## Claims

1. A method of broadcasting audio data from a broadcast transmitter device (10C) having a Bluetooth Low Energy Audio (BTLEA) wireless interface (16) to a broadcast receiver device (14) a having a BTLEA wireless interface (16), the method comprising:
establishing spatial proximity with a predetermined maximal distance between the broadcast receiver device and a broadcast designator device (10C, 18);
transmitting, as BT advertisements, by the broadcast designator device, broadcast designation information identifying a broadcast of interest (10C, 12C) for the broadcast receiver device;
receiving, by the broadcast receiver device, BT advertisements from the broadcast designator device;
identifying, by the broadcast receiver device, the broadcast designator device and storing broadcast designation information received from the broadcast designator device on the broadcast receiver device;
scanning for BTLEA broadcasts (12A, 12B, 12C), and judging, based on the stored received broadcast designation information, whether the broadcast of interest is available.

2. The method of claim 1, wherein said scanning for BTLEA broadcasts (12A, 12B, 12C) and said judging whether the broadcast of interest is available is done by the broadcast receiver device.

3. The method of claim 1, further comprising
associating a delegate device (20) with the broadcast receiver device; and
transmitting the broadcast designation information from the broadcast receiver device to the delegate device and storing the broadcast designation information received from the broadcast receiver device on the delegate device;
wherein said scanning for BTLEA broadcasts (12A, 12B, 12C) and said judging whether the broadcast of interest is available is done by the delegate device.

4. The method of one of claims 2 and 3, further comprising: selecting, when the broadcast receiver device (14) or the delegate device (20), respectively, judges that the broadcast of interest (10C, 12C) is available, by the broadcast receiver device, the broadcast of interest for reception by the broadcast receiver device.

5. The method of one of claims 2 and 3, further comprising: displaying, when the broadcast receiver device (14) or the delegate deice (20), respectively, judges that the broadcast of interest (10C, 12C) is available, the availability of the broadcast of interest to a user.

6. The method of one of the preceding claims, wherein said maximal distance is from 5 cm to 50 cm.

7. The method of one of the preceding claims, wherein the broadcast designator device (10C, 18) is identified by estimating, by the broadcast receiver device (14), the distance to the broadcast designator device and judging whether the estimated distance is not more than the predetermined maximal distance, and wherein the distance to the broadcast designator device (10C, 18) preferably is estimated by comparing, by the broadcast receiver device (14), the received signal strength with a nominal transmit power included in the broadcast designation information received from the broadcast designator device.

8. The method of one of the preceding claims, wherein the broadcast designator device (10C, 18) transmits the BT advertisements with a predetermined transmission power selected such that the transmission range of the BT advertisements is kept substantially within said predetermined maximal distance, and/or wherein the broadcast designator device (10C, 18) transmits the BT advertisements for a given transmission time period only, which preferable is from 10 sec to 180 sec.

9. The method of one of the preceding claims, wherein the identification of the broadcast of interest (10C, 12C) designated in the broadcast designation information includes an identification of the broadcast transmitter device (10C) as a specific broadcast device of interest, or wherein the identification of the broadcast of interest in the broadcast designation information includes an identification of a specific broadcast (12C) which may be transmitted by any suitable broadcast transmitter device (10A, 10B, 10C).

10. The method of one of the preceding claims, wherein said broadcast transmitter device (10C) acts as the broadcast designator device, or wherein the broadcast designator device is an auxiliary device (18) different from the broadcast transmitter device (10C),such as a smartphone, a remote control or a dedicated device.

11. A method of broadcasting audio data from a broadcast transmitter device (10C), having a BTLEA wireless interface (16) to a broadcast receiver device (14) a having a BTLEA wireless interface (16), the method comprising:
associating a delegate device (20) with the broadcast receiver device;
establishing spatial proximity with a predetermined maximal distance between the delegate device and a broadcast designator device (10C, 18);
transmitting, as BT advertisements, by the broadcast designator device, broadcast designation information identifying a broadcast of interest for the broadcast receiver device;
receiving, by the delegate device, BT advertisements from the broadcast designator device;
identifying, by the delegate device, the broadcast designator device and storing broadcast designation information received from the broadcast designator device on the delegate device;
scanning, by the delegate device, for BTLEA broadcasts (12A, 12B, 12C), and judging, based on the stored received broadcast designation information, whether the broadcast of interest is available.

12. The method of one of claims 28 to 31, wherein the broadcast receiver device (14) is one of the two hearing devices of a binaural hearing system and the delegate device (20) is the other one of the two hearing devices of the binaural hearing system, or wherein the delegate device (20) is a smartphone or a remote control.

13. A system for broadcasting audio data from a broadcast transmitter device (10C) having a Bluetooth Low Energy Audio (BTLEA) wireless interface (16) to a broadcast receiver device (14) having a BTLEA wireless interface (16), the system comprising
the broadcast transmitter device, the broadcast receiver device and a broadcast designator device (10C, 18), wherein
the broadcast designator device is configured to transmit, as BT advertisements, broadcast designation information identifying a broadcast of interest (10C, 12C) for the broadcast receiver device;
the broadcast receiver device is configured to receive BT advertisements from the broadcast designator device when located in spatial proximity within a predetermined maximal distance to the broadcast designator device;
the broadcast receiver device is further configured to store broadcast designation information received from the broadcast designator device; and
the broadcast receiver device is further configured to scan for BTLEA broadcasts (12A, 12B, 12C) and to judge, based on the stored received broadcast designation information, whether the broadcast of interest is available.

14. A system for broadcasting audio data from a broadcast transmitter device (10C) having a BTLEA wireless interface (16) to a broadcast receiver device (14) having a BTLEA wireless interface (16), the system comprising the broadcast transmitter device, the broadcast receiver device, a broadcast designator device (18) and a delegate device (20) associated with the broadcast receiver device, wherein
the broadcast designator device is configured to transmit, as BT advertisements, broadcast designation information identifying a broadcast of interest (10C, 12C) for the broadcast receiver device;
the delegate device is configured to receive BT advertisements from the broadcast designator device when located in spatial proximity within a predetermined maximal distance to the broadcast designator device;
the delegate device is configured to store broadcast designation information received from the broadcast designator device; and
the delegate device is configured to scan for BTLEA broadcasts (12A, 12B, 12C) and to judge, based on the stored received broadcast designation information, whether the BTLEA broadcast of interest is available.

15. A system for broadcasting audio data from a broadcast transmitter device (10C) having a BTLEA wireless interface (16) to a broadcast receiver device (14) having a BTLEA wireless interface (16), the system comprising the broadcast transmitter device, the broadcast receiver device, a broadcast designator device (18) and a delegate device (20) associated with the broadcast receiver device, wherein
the broadcast designator device is configured to transmit, as BT advertisements, broadcast designation information identifying a broadcast of interest (10C, 12C) for the broadcast receiver device;
the broadcast receiver device is configured to receive BT advertisements from the broadcast designator device when located in spatial proximity within a predetermined maximal distance to the broadcast designator device and to store broadcast designation information received from the broadcast designator device;
the broadcast receiver device is configured to transmit the received broadcast designation information to the delegate device
the delegate device is configured to store the broadcast designation information received from the broadcast receiver device on the delegate device; and
the delegate device is configured to scan for BTLEA broadcasts (12A, 12B, 12C) and to judge, based on the stored received broadcast designation information, whether the BTLEA broadcast of interest is available.
